# EUROPEAN PATENT SPECIFICATION

(11) **EP 4 257 895 B1**
(45) Date of publication and mention of the grant of the patent: **10.06.2026**
(21) Application number: 21917198.0
(22) Date of filing: 23.11.2021
(51) Int. Cl.: F16L 37/248, F25D 23/12, C02F 1/00

(54) **WATER PATH INTEGRATED STRUCTURE AND REFRIGERATOR HAVING SAME**
INTEGRIERTE WASSERWEGSTRUKTUR UND KÜHLSCHRANK DAMIT
STRUCTURE INTÉGRÉE DE TRAJET D'EAU ET RÉFRIGÉRATEUR DOTÉ DE CELLE-CI

(30) Priority: 06.01.2021 CN 202110012962
(43) Date of publication of application: 11.10.2023
(73) Proprietor: Qingdao Haier Refrigerator Co., Ltd, Qingdao, Shandong 266101 (CN); Haier Smart Home Co., Ltd., Qingdao, Shandong 266101 (CN)
(72) Inventor: YANG, Jun, Qingdao, Shandong 266101 (CN)
(74) Representative: Gille Hrabal Partnerschaftsgesellschaft mbB Patentanwälte
(86) International application number: PCT/CN2021/132417
(87) International publication number: WO 2022/148157

(56) References cited:
- CN-A- 102 466 386
- CN-A- 107 893 889
- CN-A- 109 708 403
- CN-A- 111 750 134
- CN-U- 201 651 632
- CN-U- 206 175 903
- DE-A1- 4 110 676
- US-A1- 2004 238 777
- US-A1- 2005 133 427
- US-A1- 2010 229 592
- US-A1- 2011 089 263
- US-A1- 2015 198 362

## Description

### TECHNICAL FIELD

The present invention relates to the field of refrigerator water circuits, and in particular, to a water-circuit integrated device and a refrigerator having the same.

### BACKGROUND

Currently, in order to facilitate use of users, a plurality of refrigerator products are provided therein with water-circuit integrated devices; specifically, a filter, a water valve and a water bottle are integrated together, such that external water can be filtered to be supplied to a dispenser and an ice maker; the water-circuit integrated device is also convenient to uniformly fix and repair.

However, in a prior art, the filter and the water valve as well as the water valve and the water bottle are required to be connected by water pipes to allow water to pass through, and in the above-mentioned existing water-circuit integrated device, repeated bent placement of the water pipes, water circuit reversion and insertion are required to be performed in a narrow space, such that there exists a problem that the water pipes are bent to be damaged and difficult to repair, and a risk of water leakage exists. It is also referred to the prior art documents US2004238777A1, US2010229592A1, US2011089263A1 and US2015198362A1.

### SUMMARY

An object of the present invention is to provide a water-circuit integrated device and a refrigerator having the same. The problem is solved by the water-circuit integrated device according to claim 1. Preferred embodiments are described in the dependent claims.

A water-circuit integrated device comprises a filter, a water valve and a water bottle communicated in sequence,
wherein the water valve is selectively communicated with the water bottle through a water-bottle water inlet assembly; the water-bottle water inlet assembly comprises a water inlet sleeve and a water inlet insertion part rotatably inserted into the water inlet sleeve, and water inlet flow channels which can be mutually communicated are arranged in the water inlet insertion part and the water inlet sleeve; the water inlet sleeve is provided on one of the water bottle and the water valve, and the water inlet insertion part is provided on the other of the water bottle and the water valve; the water inlet insertion part is provided with a water inlet limiting protrusion, and the water inlet sleeve comprises a water inlet cylinder, a water inlet insertion port formed on the water inlet cylinder and a water inlet limiting hole provided in a circumferential direction of the water inlet cylinder; the water inlet sleeve is further provided with a water inlet guide groove matched with the water inlet limiting protrusion, and the water inlet guide groove extends from the water inlet insertion port along an axial direction of the water inlet sleeve and is communicated with an end portion of the water inlet limiting hole; and in the circumferential direction of the water inlet cylinder, a dimension of the water inlet limiting hole is greater than a dimension of the water inlet guide groove.

As a further improvement to the present invention, wherein the water inlet sleeve extends outwards from a water inlet of the water bottle, and the water inlet sleeve and the water bottle are integrally formed; the water inlet insertion part extends outwards from a water outlet of the water valve, and the water inlet insertion part and the water valve are integrally formed.

As a further improvement to the present invention, wherein the filter is selectively communicated with the water valve through a filter water outlet assembly; the filter water outlet assembly comprises a water outlet sleeve and a water outlet insertion part rotatably inserted into the water outlet sleeve, and water outlet flow channels which can be mutually communicated are arranged in the water outlet insertion part and the water outlet sleeve; the water outlet sleeve is provided on one of the water bottle and the water valve, and the water outlet insertion part is provided on the other of the water bottle and the water valve; the water outlet insertion part is provided with a water outlet limiting protrusion, and the water outlet sleeve comprises a water outlet cylinder, a water outlet insertion port formed on the water outlet cylinder and a water outlet limiting hole provided in a circumferential direction of the water outlet cylinder; the water outlet sleeve is further provided with a water outlet guide groove matched with the water outlet limiting protrusion, and the water outlet guide groove extends from the water outlet insertion port along an axial direction of the water outlet sleeve and is communicated with an end portion of the water outlet limiting hole; in the circumferential direction of the water outlet cylinder, a dimension of the water outlet limiting hole is greater than a dimension of the water outlet guide groove.

As a further improvement to the present invention, of the filter, the water valve and the water bottle are arranged adjacent to each other, and the water-bottle water inlet assembly is perpendicular to the filter water outlet assembly.

As a further improvement to the present invention, wherein the water inlet insertion part comprises a first insertion portion and a second insertion portion provided at a front end of the first insertion portion, and an outer diameter of the second insertion portion is less than an outer diameter of the first insertion portion.

As a further improvement to the present invention, wherein the second insertion portion is sleeved with a sealing part.

As a further improvement to the present invention, wherein the water inlet insertion part further comprises a stopper connected with the first insertion portion, and an end surface of the stopper abuts against an end surface of the water inlet sleeve.

As a further improvement to the present invention, wherein the water inlet insertion part is provided with two water inlet limiting protrusions, the two water inlet limiting protrusions are symmetrically arranged relative to an axis of the water inlet insertion part, and two water inlet guide grooves are arranged at positions on the water inlet sleeve corresponding to the two water inlet limiting protrusions.

As a further improvement to the present invention, wherein the water-circuit integrated device further comprises a housing, and the housing encloses the filter and the water valve.

The invention on the other hand also discloses a refrigerator, said refrigerator comprising a freezer compartment, said freezer compartment being provided with water-circuit integrated device as described above.

Compared with a prior art, in the water-circuit integrated device according to the present invention, the filter and the water valve are selectively communicated by using the water-bottle water inlet assembly, and the filter and the water valve can be communicated by rotary fitting of the water inlet insertion part and the water inlet sleeve, such that the filter and the water valve are connected without additionally providing a water pipe, a problem that the water pipe is bent to be damaged and difficult to repair is solved, and a risk of water leakage is avoided.

### BRIEF DESCRIPTION OF THE DRAWINGS

FIG. 1 is a schematic structural diagram of a water-circuit integrated device according to an embodiment of the present invention;
FIG. 2 is a schematic structural diagram of a water-circuit integrated device according to an embodiment of the present invention;
FIG. 3 is a schematic structural diagram of a water-circuit integrated device according to an embodiment of the present invention;
FIG. 4 is a schematic enlarged diagram of part A of FIG. 3; and
FIG. 5 is a schematic sectional diagram of a water-bottle water inlet assembly in an embodiment of the present invention.

### DETAILED DESCRIPTION

Hereinafter, the present invention will be described in detail in conjunction with specific embodiments shown in the accompanying drawings. However, these embodiments have no limitations on the present invention, and the protection scope of the present invention is defined by the appended claims.

It should be understood that the terms expressive of spatial relative positions, such as "upper", "above", "lower", "below", or the like herein are used to describe the relationship of a unit or feature relative to another unit or feature in the drawings, for the purpose of illustration and description. Terms expressive of the spatial relative positions are intended to include different orientations of the device in use or operation other than the orientations shown in the drawings.

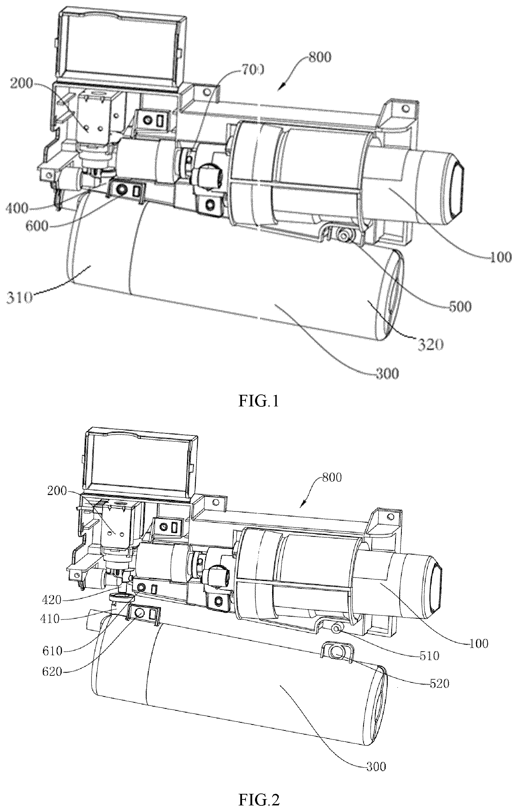

As shown in FIGS. 1 to 5, an embodiment of the present invention discloses a water-circuit integrated device. The water-circuit integrated device includes a filter 100, a water valve 200 and a water bottle 300 communicated in sequence, the water bottle 300 includes a proximal end 310 and a distal end 320 arranged oppositely in a length direction, the proximal end 310 of the water bottle 300 is detachably connected with the water valve 200 by a water-bottle water inlet assembly 400, and the distal end 310 of the water bottle 300 is detachably connected with the filter 100 by a distal-end snapping assembly 500. The water-bottle water inlet assembly 400 includes a rotation axis perpendicular to the length direction of the water bottle 300. During snapped connection of the distal-end snapping assembly 500, the water-bottle water inlet assembly 400 realizes locked connection in an axial direction of the rotation axis. When the water-bottle water inlet assembly 400 is released in the axial direction of the rotation axis, the distal-end snapping assembly 500 is released from the snapped connection.

In the water-circuit integrated device according to the present invention, one end of the water bottle 300 is detachably connected with the water valve 200 by the water-bottle water inlet assembly 400, and the other end of the water bottle is detachably connected with the filter 100 by the distal-end snapping assembly 500, such that during snapped connection of the distal-end snapping assembly 500, the water-bottle water inlet assembly 400 also realizes locked connection, and the water bottle 300, the water valve 200 and the filter 100 can be connected together. When the water-bottle water inlet assembly 400 is released, the distal-end snapping assembly 500 is just released from the snapped connection, such that the water bottle 300 can be smoothly detached from the water valve 200 and the filter 100. Therefore, the water bottle 300 can be conveniently connected with or detached from the water valve 200 and the filter 100 by fitting of the water-bottle water inlet assembly 400 and the distal-end snapping assembly 500, such that the water bottle 300 can be conveniently replaced or repaired subsequently.

Further, when the distal-end snapping assembly 500 is released from the snapped connection, the water-bottle water inlet assembly 400 is released in the axial direction of the rotation axis. That is, when the distal-end snapping assembly 500 is released from the snapped connection, the water-bottle water inlet assembly 400 is also released in the axial direction of the rotation axis, and at this point, the water bottle 300 can be detached from the water valve 200 and the filter 100. Thus, state transitions of the water-bottle water inlet assembly 400 and the distal-end snapping assembly 500 are completely consistent, such that a stroke of a rotation operation can be shortened, and an operation of mounting or dismounting the water bottle 300 is simpler and more convenient.

In the embodiment of the present invention, during snapped connection of the distal-end snapping assembly 500, a direction of the locked connection of the water-bottle water inlet assembly 400 is different from a direction of the snapped connection of the distal-end snapping assembly 500. That is, the water-bottle water inlet assembly 400 and the distal-end snapping assembly 500 are connected with the water bottle in different directions, thereby further reinforcing the connection of the water bottle 300 with the water valve 200 and the filter 100; the connection in the two different directions does not interfere, such that the water bottle 300 is not easily released and dropped even when the assembly in one direction fails.

Still further, during snapped connection of the distal-end snapping assembly 500, the direction of the locked connection of the water-bottle water inlet assembly 400 is the axial direction of the rotation axis, and the direction of the snapped connection of the distal-end snapping assembly 500 is perpendicular to the axial direction of the rotation axis. That is, directions of the connection of the water-bottle water inlet assembly 400 and the distal-end snapping assembly 500 to the water bottle are perpendicular to each other. Mutual interference of the connection in the two directions can be reduced to the minimum, such that the connection of the water bottle is firmer.

In the embodiment of the present invention, the distal-end snapping assembly 500 includes a distal-end snapping portion and a distal-end fitting portion which can be snapped to or separated from the distal-end snapping portion, the distal-end snapping portion is provided on one of the water bottle 300 and the filter 100, and the distal-end fitting portion is provided on the other of the water bottle 300 and the filter 100. The snapping or separating operation can be easily realized by mutual fitting of the distal-end snapping portion and the distal-end fitting portion. In the present embodiment, the distal-end snapping portion is provided on the filter 100, and the distal-end fitting portion is provided on the water bottle 300.

Further, as shown in FIG. 2, the distal-end snapping portion is configured as a distal-end hanging buckle 510 provided on the filter 100, the distal-end fitting portion is configured as a distal-end hanging hole 520 provided on the water bottle 300, and during the snapped connection of the distal-end snapping assembly 500, the distal-end hanging buckle 510 is inserted into the distal-end hanging hole 520. The connection by the hanging buckle and the hanging hole has a simple structure and a low cost, and is easy to operate. Specifically, the snapped connection of the distal-end snapping assembly 500 may be realized directly by inserting the distal-end hanging buckle 510 into the distal-end hanging hole 520. When the connection of the distal-end snapping assembly 500 is desired to be reinforced, a thread may be provided in the distal-end hanging buckle 510, and when the distal-end hanging buckle 510 is inserted into the distal-end hanging hole 520, a screw is screwed into and in threaded connection with the distal-end hanging buckle 510, and an end surface of the screw abuts against an edge of the hanging hole 520. In other embodiments, the distal-end hanging buckle may also be in interference fit with the distal-end hanging hole. Therefore, in a transportation/assembly process of the water-circuit integrated device or a refrigerator, even when conditions of collision or shaking, or the like, are generated, the distal end of the water bottle cannot be easily disconnected. Also, the distal-end hanging buckle 510 may extend outwards from a housing of the filter 100, the distal-end hanging buckle 510 and the housing of the filter 100 may be integrally formed, the distal-end hanging hole 520 may extend outwards from the water bottle 300, and the distal-end hanging hole 520 and the water bottle 300 may be integrally formed. The arrangement of the integrally formed structure makes the connection between the water bottle 300 and the filter 100 more stable and firmer.

In other embodiments, the distal-end snapping portion and the distal-end fitting portion may be of other structures in snapped connection.

Preferably, the proximal end 310 of the water bottle 300 is also detachably connected with the filter 100 by a proximal-end snapping assembly 600. During snapped connection of the distal-end snapping assembly 500, the proximal-end snapping assembly 600 realizes snapped connection. When the water-bottle water inlet assembly 500 is released in the axial direction of the rotation axis, the proximal-end snapping assembly 600 is released from the snapped connection. The proximal-end snapping assembly 600 is provided at the proximal end 310 of the water bottle 300, thereby further strengthening the connection at the proximal end 310 of the water bottle 300. Furthermore, the proximal-end snapping assembly 600 can also be fitted with the water-bottle water inlet assembly 400 and the distal-end snapping assembly 500 to realize synchronous connection or detachment. Specifically, the proximal-end snapping assembly 600 also includes a proximal-end snapping portion 610 and a proximal-end fitting portion 620 which can be snapped to or separated from the proximal-end snapping portion 610, and in the embodiment of the present invention, the proximal-end snapping portion is configured as a proximal-end hanging buckle 610, and the proximal-end fitting portion is configured as a proximal-end hanging hole 620.

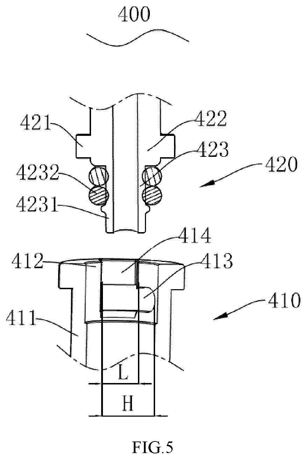

In the present invention, the water bottle 300 and the water valve 200 are also selectively communicated by the water-bottle water inlet assembly 400, and the water-bottle water inlet assembly 400 includes: a water inlet sleeve 410 and a water inlet insertion part 420 rotatably inserted into the water inlet sleeve 410. The water inlet insertion part 420 and the water inlet sleeve 410 are provided therein with water inlet flow channels which can be communicated with each other. The water inlet sleeve 410 is provided on one of the water bottle 300 and the water valve 200, and the water inlet insertion part 420 is provided on the other of the water bottle 300 and the water valve 200. The water inlet insertion part 420 is provided with a water inlet limiting protrusion 421, and the water inlet sleeve 410 includes a water inlet cylinder 411, a water inlet insertion port 412 formed on the water inlet cylinder 411 and a water inlet limiting hole 413 provided in a circumferential direction of the water inlet cylinder 411. The water inlet sleeve 410 is further provided with a water inlet guide groove 414 matched with the water inlet limiting protrusion 421, and the water inlet guide groove 414 extends axially from the water inlet insertion port 412 along the water inlet sleeve 410 and is communicated with an end portion of the water inlet limiting hole 413. As shown in FIG. 5, in the circumferential direction of the water inlet cylinder 411, a dimension H of the water inlet limiting hole 413 is greater than a dimension L of the water inlet guide groove 414. That is, the water-bottle water inlet assembly 400 not only serves to connect the water bottle 300 and the water valve 200, but also serves to allow water to pass therethrough, that is, allow water in the water valve 200 to flow into the water bottle 300, after the connection. In the embodiment of the present invention, external water firstly flows into the filter 100, and then flows into the water valve 200 from the filter 100, the water valve 200 has two water outlets, one of the two water outlets extends outwards to form the water inlet insertion part 420, and an inlet of the water bottle 300 extends outwards to form the water inlet sleeve 410, such that the water can flow through the water inlet insertion part 420 and the water inlet sleeve 410 after the water inlet insertion part 420 and the water inlet sleeve 410 are connected.

In addition, in the circumferential direction of the water inlet cylinder 411, the dimension H of the water inlet limiting hole 413 is set to be greater than the dimension L of the water inlet guide groove 414, such that when the water inlet insertion part 420 is inserted into the water inlet sleeve 410, the water inlet limiting protrusion 421 on the water inlet insertion part 420 can enter the water inlet guide groove 414 from the water inlet insertion port 412 on the water inlet sleeve 410, and then, the water bottle 300 is rotated along the rotation axis in a first direction, and the water inlet limiting protrusion 421 can enter the water inlet limiting hole 413; since the dimension H of the water inlet limiting hole 413 is larger and the water inlet limiting hole 413 is not communicated with the water inlet insertion port 412, at this point, the water inlet limiting protrusion 421 and the water inlet limiting hole 413 are in snap fit, such that even when a force is applied in a direction opposite to an insertion direction, the water inlet insertion part 420 cannot reversely exit from the water inlet sleeve 410, thereby locking the water-bottle water inlet assembly 400. Then, the water bottle 300 is rotated along the rotation axis in a direction opposite to the first direction, such that the water inlet limiting protrusion 421 is aligned with the water inlet guide groove 414, thereby releasing the water-bottle water inlet assembly 400 in the axial direction of the rotation axis. At this point, the water inlet limiting protrusion 421 can move towards the water inlet insertion port 412 along the water inlet guide groove 414 by applying a force in the direction opposite to the insertion direction, and finally, the water inlet insertion part 420 reversely exits from the water inlet sleeve 410.

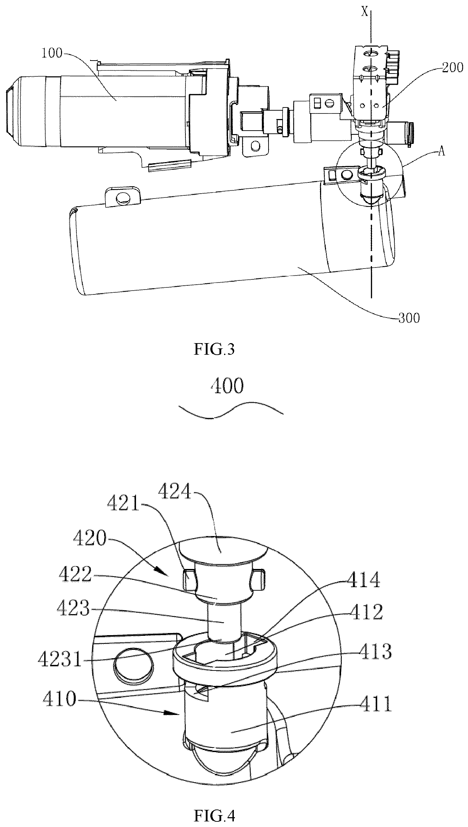

Specifically, as shown in FIG. 3, the rotation axis is configured as a central axis X of the water inlet sleeve 410. That is, by rotating the water bottle 300 about the central axis X of the water inlet sleeve 410, the water-bottle water inlet assembly 400 can be locked or released, and the distal-end snapping assembly 500 can realize snapped connection or be released from the snapped connection. Thus, the connection and detachment of the water bottle 300 are simple, and an operation of a user is convenient.

Further, the water inlet sleeve 410 extends outwards from a water inlet of the water bottle 300, and the water inlet sleeve 410 and the water bottle 300 are integrally formed. The water inlet insertion part 420 extends outwards from a water outlet of the water valve 200, and the water inlet insertion part 420 and the water valve 200 are integrally formed. That is, no water pipe is provided between the water bottle 300 and the water valve 200, and the water bottle 300 and the water valve 200 are directly connected through the water-bottle water inlet assembly 400 extending from the respective components of the water bottle 300 and the water valve 200, such that the connection is more stable, and a problem that the water pipe is bent to be damaged and difficult to repair, and a risk of water leakage are avoided.

Preferably, the water inlet insertion part 420 includes a first insertion portion 422 and a second insertion portion 423 provided at a front end of the first insertion portion 422, and an outer diameter of the second insertion portion 423 is less than an outer diameter of the first insertion portion 422. When the water inlet insertion part 420 is inserted into the water inlet sleeve 410, the second insertion portion 423 having a less inner diameter is inserted into the water inlet sleeve 410 first, such that a guiding function can be provided for an insertion action, and the connection of the water-bottle water inlet assembly 400 is easier.

In the embodiment of the present invention, the second insertion portion 423 is sleeved with a sealing part The sealing part 4231 is configured to fill a gap between an outer wall of the second insertion portion 423 and an inner wall of the water inlet sleeve 410, thereby preventing water leakage. Specifically, an inner diameter at a position of the water inlet sleeve 410 corresponding to the sealing part 4231 on the second insertion portion 423 is reduced, such that the sealing part 4231 is pressed between the inner wall of the water inlet sleeve 410 and the second insertion portion 423 to further enhance a sealing effect.

Further, the water inlet insertion part 420 further includes a stopper 424 connected with the first insertion portion 421, and an end surface of the stopper 424 abuts against an end surface of the water inlet sleeve 410. The stopper 424 serves as a terminal point of insertion of the water inlet insertion part 420 into the water inlet sleeve 410; that is, when the water inlet insertion part is inserted into the water inlet sleeve 410, and the end surface of the stopper 424 is seen to abut against the end surface of the water inlet sleeve 410, the insertion action can be determined to be in place.

As shown in FIG. 4, the water inlet insertion part 420 is provided with two water inlet limiting protrusions 421, the two water inlet limiting protrusions 421 are symmetrically arranged relative to an axis of the water inlet insertion part 420, and two water inlet guide grooves 413 are arranged at positions on the water inlet sleeve corresponding to the two water inlet limiting protrusions 421. The two symmetrical water inlet limiting protrusions 421 and the two corresponding water inlet guide grooves 413 are arranged, such that the water inlet insertion part 420 and the water inlet sleeve 410 can be locked more firmly and stably.

Preferably, the filter 100 and the water valve 200 are selectively communicated through a filter water outlet assembly 700. The filter water outlet assembly 700 includes: a water outlet sleeve and a water outlet insertion part rotatably inserted into the water outlet sleeve. The filter water outlet assembly 700, the water outlet sleeve and the water outlet insertion part have identical structures to and different positions from the water-bottle water inlet assembly 400, the water inlet sleeve 410 and the water inlet insertion part 420. Therefore, the detailed structure of the filter water outlet assembly 700 is not repeated.

Further, any two of the filter 100, the water valve 200 and the water bottle 300 are arranged adjacent to each other, and the water-bottle water inlet assembly 400 is perpendicular to the filter water outlet assembly 700. That is, the central axis X of the water outlet sleeve is perpendicular to the central axis of the water inlet sleeve 410.

As shown in FIG. 1, the water-circuit integrated device further includes a housing 800, and the housing 800 encloses the filter 100 and the water valve 200. Specifically, the housing 800 also functions to connect the water-circuit integrated device to the refrigerator. In addition, the distal-end hanging buckle 510 is also provided on the housing 800, such that the connection of the water bottle 300 is more stable.

An embodiment of the present invention discloses a refrigerator including a refrigerating chamber, wherein the refrigerating chamber is provided therein with the water-circuit integrated device as mentioned above.

In the water-circuit integrated device according to the present invention, one end of the water bottle is detachably connected with the water valve by the water-bottle water inlet assembly, and the other end of the water bottle is detachably connected with the filter by the distal-end snapping assembly, such that during snapped connection of the distal-end snapping assembly, the water-bottle water inlet assembly also realizes locked connection, and the water bottle, the water valve and the filter can be connected together. When the water-bottle water inlet assembly is released, the distal-end snapping assembly is just released from the snapped connection, such that the water bottle can be smoothly detached from the water valve and the filter. Therefore, the water bottle can be conveniently connected with or detached from the water valve and the filter by fitting of the water-bottle water inlet assembly and the distal-end snapping assembly, such that the water bottle can be conveniently replaced or repaired subsequently. The directions of the connection of the water-bottle water inlet assembly and the distal-end snapping assembly to the water bottle are perpendicular to each other. Therefore, the connection of the water bottle with the water valve and the filter is further reinforced; the connection in the two different directions does not interfere, such that the water bottle is not easily released and dropped even when the assembly in one direction fails. The water-bottle water inlet assembly not only serves to connect the water bottle and the water valve, but also serves to allow water to pass therethrough, that is, allow water in the water valve to flow into the water bottle, after the connection. The rotation axis is constructed as the central axis of the water inlet sleeve, such that the connection and detachment of the water bottle are simple, and the operation of the user is convenient. The water inlet sleeve extends outwards from the water inlet of the water bottle, and the water inlet sleeve and the water bottle are integrally formed. The water inlet insertion part extends outwards from the water outlet of the water valve, and the water inlet insertion part and the water valve are integrally formed. No water pipe is provided between the water bottle and the water valve, and the water bottle and the water valve are directly connected through the water-bottle water inlet assembly extending from the respective components of the water bottle and the water valve, such that the connection is more stable, and the problem that the water pipe is bent to be damaged and difficult to repair, and the risk of water leakage are avoided. The two symmetrical water inlet limiting protrusions and the two corresponding water inlet guide grooves are arranged, such that the water inlet insertion part and the water inlet sleeve can be locked more firmly and stably. The filter and the water valve are selectively communicated through the filter water outlet assembly. The central axis X of the water outlet sleeve is perpendicular to the central axis of the water inlet sleeve.

It should be understood that although the present specification is described based on embodiments, not every embodiment contains only one independent technical solution. Such a narration way of the present specification is only for the sake of clarity. Those skilled in the art should take the present specification as an entirety.

A series of the detailed descriptions set forth above is merely specific description of feasible embodiments of the present invention, and is not intended to limit the protection scope of the present invention. The protection scope of the present invention is defined by the appended claims.

## Claims

1. A water-circuit integrated device, comprising a filter (100), a water valve (200) and a water bottle (300) communicated in sequence,
wherein the water valve (200) is selectively communicated with the water bottle (300) through a water-bottle water inlet assembly (400); the water-bottle water inlet assembly (400) comprises a water inlet sleeve (410) and a water inlet insertion part (420) rotatably inserted into the water inlet sleeve (410), and water inlet flow channels which are configured to be mutually communicated are arranged in the water inlet insertion part (420) and the water inlet sleeve (410); the water inlet sleeve (410) is provided on one of the water bottle (300) and the water valve (200), and the water inlet insertion part (420) is provided on the other of the water bottle (300) and the water valve(200); the water inlet insertion part (420) is provided with a water inlet limiting protrusion(421), and the water inlet sleeve (410) comprises a water inlet cylinder (411), a water inlet insertion port (412) formed on the water inlet cylinder (411) and a water inlet limiting hole (413) provided in a circumferential direction of the water inlet cylinder(411); the water inlet sleeve (410) is further provided with a water inlet guide groove (414) matched with the water inlet limiting protrusion (421), and the water inlet guide groove (414) extends from the water inlet insertion port (412) along an axial direction of the water inlet sleeve (410) and is communicated with an end portion of the water inlet limiting hole (413); and in the circumferential direction of the water inlet cylinder (411), a dimension of the water inlet limiting hole (413) is greater than a dimension of the water inlet guide groove (414) such that when the water inlet insertion part (420) is inserted into the water inlet sleeve (410), the water inlet limiting protrusion (421) on the water inlet insertion part (420) is configured to enter the water inlet guide groove (414) from the water inlet insertion port (412) on the water inlet sleeve (410), and when the water bottle (300) is rotated along the rotation axis in a first direction, the water inlet limiting protrusion (421) is configured to enter the water inlet limiting hole (413); since the dimension of the water inlet limiting hole (413) is larger and the water inlet limiting hole (413) is not communicated with the water inlet insertion port (412), at this state, the water inlet limiting protrusion (421) and the water inlet limiting hole (413) are configured to be in snap fit;
wherein one end of the water bottle (300) is detachably connected with the water valve (200) by the water-bottle water inlet assembly (400), the water-bottle water inlet assembly (400) not only serves to connect the water bottle (300) and the water valve (200), but also serves to allow water to pass therethrough, no water pipe is provided between the water bottle (300) and the water valve (200), and the water bottle (300) and the water valve (200) are directly connected through the water-bottle water inlet assembly (400).

2. The water-circuit integrated device according to claim 1, wherein the water inlet sleeve (410) extends outwards from a water inlet of the water bottle (300), and the water inlet sleeve (410) and the water bottle (300) are integrally formed; the water inlet insertion part (420) extends outwards from a water outlet of the water valve (200), and the water inlet insertion part (420) and the water valve (200) are integrally formed.

3. The water-circuit integrated device according to claim 1, wherein the filter is selectively communicated with the water valve (200) through a filter water outlet assembly(700); the filter water outlet assembly(700) comprises a water outlet sleeve and a water outlet insertion part rotatably inserted into the water outlet sleeve, and water outlet flow channels which can be mutually communicated are arranged in the water outlet insertion part and the water outlet sleeve; the water outlet sleeve is provided on one of the water bottle (300) and the water valve (300), and the water outlet insertion part is provided on the other of the water bottle (300) and the water valve (300); the water outlet insertion part is provided with a water outlet limiting protrusion, and the water outlet sleeve comprises a water outlet cylinder, a water outlet insertion port formed on the water outlet cylinder and a water outlet limiting hole provided in a circumferential direction of the water outlet cylinder; the water outlet sleeve is further provided with a water outlet guide groove matched with the water outlet limiting protrusion, and the water outlet guide groove extends from the water outlet insertion port along an axial direction of the water outlet sleeve and is communicated with an end portion of the water outlet limiting hole; in the circumferential direction of the water outlet cylinder, a dimension of the water outlet limiting hole is greater than a dimension of the water outlet guide groove.

4. The water-circuit integrated device according to claim 3, wherein any two of the filter (100), the water valve (200) and the water bottle (300) are arranged adjacent to each other, and the water-bottle water inlet assembly (400) is perpendicular to the filter water outlet assembly (700).

5. The water-circuit integrated device according to claim 1, wherein the water inlet insertion part (420) comprises a first insertion portion (422) and a second insertion portion (423) provided at a front end of the first insertion portion (422), and an outer diameter of the second insertion portion (423) is less than an outer diameter of the first insertion portion (422).

6. The water-circuit integrated device according to claim 5, wherein the second insertion portion (423) is sleeved with a sealing part (4231).

7. The water-circuit integrated device according to claim 5, wherein the water inlet insertion part (420) further comprises a stopper (424) connected with the first insertion portion (421), and an end surface of the stopper (424) abuts against an end surface of the water inlet sleeve (410).

8. The water-circuit integrated device according to claim 1, wherein the water inlet insertion part (420) is provided with two water inlet limiting protrusions (421), the two water inlet limiting protrusions (421) are symmetrically arranged relative to an axis of the water inlet insertion part (420), and two water inlet guide grooves (413) are arranged at positions on the water inlet sleeve (420) corresponding to the two water inlet limiting protrusions (421).

9. The water-circuit integrated device according to claim 1, wherein the water-circuit integrated device further comprises a housing (800), and the housing(800) encloses the filter (100) and the water valve (200).

10. A refrigerator, comprising a refrigerating chamber, wherein the refrigerating chamber is provided therein with the water-circuit integrated device according to any one of claims 1 to 9.

## Patentansprüche

1. Eine integrierte Wasserkreislauf-Vorrichtung, umfassend einen Filter (100), ein Wasserventil (200) und eine Wasserflasche (300), die der Reihe nach in Verbindung stehen,
wobei das Wasserventil (200) selektiv mit der Wasserflasche (300) durch eine Wasserflaschen-Wassereinlassanordnung (400) in Verbindung steht; wobei die Wasserflaschen-Wassereinlassanordnung (400) eine Wassereinlasshülse (410) und ein Wassereinlass-Einsteckteil (420) umfasst, das drehbar in die Wassereinlasshülse (410) eingesteckt ist, und wobei Wassereinlass-Strömungskanäle, die dazu ausgebildet sind, miteinander in Verbindung zu stehen, in dem Wassereinlass-Einsteckteil (420) und der Wassereinlasshülse (410) angeordnet sind; wobei die Wassereinlasshülse (410) an einem von der Wasserflasche (300) und dem Wasserventil (200) vorgesehen ist, und das Wassereinlass-Einsteckteil (420) an dem anderen von der Wasserflasche (300) und dem Wasserventil (200) vorgesehen ist; wobei das Wassereinlass-Einsteckteil (420) mit einem Wassereinlass-Begrenzungsvorsprung (421) versehen ist, und die Wassereinlasshülse (410) einen Wassereinlasszylinder (411), eine an dem Wassereinlasszylinder (411) ausgebildete Wassereinlass-Einstecköffnung (412) und ein in einer Umfangsrichtung des Wassereinlasszylinders (411) vorgesehenes Wassereinlass-Begrenzungsloch (413) umfasst; wobei die Wassereinlasshülse (410) ferner mit einer Wassereinlass-Führungsnut (414) versehen ist, die auf den Wassereinlass-Begrenzungsvorsprung (421) abgestimmt ist, und wobei sich die Wassereinlass-Führungsnut (414) von der Wassereinlass-Einstecköffnung (412) entlang einer axialen Richtung der Wassereinlasshülse (410) erstreckt und mit einem Endabschnitt des Wassereinlass-Begrenzungslochs (413) in Verbindung steht; und wobei in der Umfangsrichtung des Wassereinlasszylinders (411) eine Abmessung des Wassereinlass-Begrenzungslochs (413) größer ist als eine Abmessung der Wassereinlass-Führungsnut (414), sodass, wenn das Wassereinlass-Einsteckteil (420) in die Wassereinlasshülse (410) eingesteckt wird, der Wassereinlass-Begrenzungsvorsprung (421) an dem Wassereinlass-Einsteckteil (420) dazu ausgebildet ist, von der Wassereinlass-Einstecköffnung (412) an der Wassereinlasshülse (410) in die Wassereinlass-Führungsnut (414) einzutreten, und wenn die Wasserflasche (300) entlang der Drehachse in einer ersten Richtung gedreht wird, ist der Wassereinlass-Begrenzungsvorsprung (421) dazu ausgebildet, in das Wassereinlass-Begrenzungsloch (413) einzutreten; wobei, da die Abmessung des Wassereinlass-Begrenzungslochs (413) größer ist und das Wassereinlass-Begrenzungsloch (413) nicht mit der Wassereinlass-Einstecköffnung (412) in Verbindung steht, in diesem Zustand der Wassereinlass-Begrenzungsvorsprung (421) und das Wassereinlass-Begrenzungsloch (413) dazu ausgebildet sind, in Schnappverbindung zu sein;
wobei ein Ende der Wasserflasche (300) durch die Wasserflaschen-Wassereinlassanordnung (400) lösbar mit dem Wasserventil (200) verbunden ist, wobei die Wasserflaschen-Wassereinlassanordnung (400) nicht nur dazu dient, die Wasserflasche (300) und das Wasserventil (200) zu verbinden, sondern auch dazu dient, ein Durchfließen von Wasser zu ermöglichen, wobei keine Wasserleitung zwischen der Wasserflasche (300) und dem Wasserventil (200) vorgesehen ist, und wobei die Wasserflasche (300) und das Wasserventil (200) direkt durch die Wasserflaschen-Wassereinlassanordnung (400) verbunden sind.

2. Die integrierte Wasserkreislauf-Vorrichtung nach Anspruch 1, wobei sich die Wassereinlasshülse (410) von einem Wassereinlass der Wasserflasche (300) nach außen erstreckt, und wobei die Wassereinlasshülse (410) und die Wasserflasche (300) einstückig ausgebildet sind; wobei sich das Wassereinlass-Einsteckteil (420) von einem Wasserauslass des Wasserventils (200) nach außen erstreckt, und wobei das Wassereinlass-Einsteckteil (420) und das Wasserventil (200) einstückig ausgebildet sind.

3. Die integrierte Wasserkreislauf-Vorrichtung nach Anspruch 1, wobei der Filter selektiv mit dem Wasserventil (200) durch eine Filter-Wasserauslassanordnung (700) in Verbindung steht; wobei die Filter-Wasserauslassanordnung (700) eine Wasserauslasshülse und ein Wasserauslass-Einsteckteil umfasst, das drehbar in die Wasserauslasshülse eingesteckt ist, und wobei Wasserauslass-Strömungskanäle, die miteinander in Verbindung stehen können, in dem Wasserauslass-Einsteckteil und der Wasserauslasshülse angeordnet sind; wobei die Wasserauslasshülse an einem von der Wasserflasche (300) und dem Wasserventil (300) vorgesehen ist, und das Wasserauslass-Einsteckteil an dem anderen von der Wasserflasche (300) und dem Wasserventil (300) vorgesehen ist; wobei das Wasserauslass-Einsteckteil mit einem Wasserauslass-Begrenzungsvorsprung versehen ist, und die Wasserauslasshülse einen Wasserauslasszylinder, eine an dem Wasserauslasszylinder ausgebildete Wasserauslass-Einstecköffnung und ein in einer Umfangsrichtung des Wasserauslasszylinders vorgesehenes Wasserauslass-Begrenzungsloch umfasst; wobei die Wasserauslasshülse ferner mit einer Wasserauslass-Führungsnut versehen ist, die auf den Wasserauslass-Begrenzungsvorsprung abgestimmt ist, und wobei sich die Wasserauslass-Führungsnut von der Wasserauslass-Einstecköffnung entlang einer axialen Richtung der Wasserauslasshülse erstreckt und mit einem Endabschnitt des Wasserauslass-Begrenzungslochs in Verbindung steht; wobei in der Umfangsrichtung des Wasserauslasszylinders eine Abmessung des Wasserauslass-Begrenzungslochs größer ist als eine Abmessung der Wasserauslass-Führungsnut.

4. Die integrierte Wasserkreislauf-Vorrichtung nach Anspruch 3, wobei beliebige zwei von dem Filter (100), dem Wasserventil (200) und der Wasserflasche (300) benachbart zueinander angeordnet sind, und wobei die Wasserflaschen-Wassereinlassanordnung (400) senkrecht zu der Filter-Wasserauslassanordnung (700) ist.

5. Die integrierte Wasserkreislauf-Vorrichtung nach Anspruch 1, wobei das Wassereinlass-Einsteckteil (420) einen ersten Einsteckabschnitt (422) und einen zweiten Einsteckabschnitt (423) umfasst, der an einem vorderen Ende des ersten Einsteckabschnitts (422) vorgesehen ist, und wobei ein Außendurchmesser des zweiten Einsteckabschnitts (423) kleiner ist als ein Außendurchmesser des ersten Einsteckabschnitts (422).

6. Die integrierte Wasserkreislauf-Vorrichtung nach Anspruch 5, wobei der zweite Einsteckabschnitt (423) mit einem Dichtungsteil (4231) umhüllt ist.

7. Die integrierte Wasserkreislauf-Vorrichtung nach Anspruch 5, wobei das Wassereinlass-Einsteckteil (420) ferner einen Anschlag (424) umfasst, der mit dem ersten Einsteckabschnitt (421) verbunden ist, und wobei eine Endfläche des Anschlags (424) an einer Endfläche der Wassereinlasshülse (410) anliegt.

8. Die integrierte Wasserkreislauf-Vorrichtung nach Anspruch 1, wobei das Wassereinlass-Einsteckteil (420) mit zwei Wassereinlass-Begrenzungsvorsprüngen (421) versehen ist, wobei die zwei Wassereinlass-Begrenzungsvorsprünge (421) symmetrisch relativ zu einer Achse des Wassereinlass-Einsteckteils (420) angeordnet sind, und wobei zwei Wassereinlass-Führungsnuten (413) an Positionen an der Wassereinlasshülse (420) angeordnet sind, die den zwei Wassereinlass-Begrenzungsvorsprüngen (421) entsprechen.

9. Die integrierte Wasserkreislauf-Vorrichtung nach Anspruch 1, wobei die integrierte Wasserkreislauf-Vorrichtung ferner ein Gehäuse (800) umfasst, und wobei das Gehäuse (800) den Filter (100) und das Wasserventil (200) umschließt.

10. Ein Kühlschrank, umfassend eine Kühlkammer, wobei die Kühlkammer darin mit der integrierten Wasserkreislauf-Vorrichtung nach einem der Ansprüche 1 bis 9 versehen ist.

## Revendications

1. Un dispositif intégré à circuit d'eau, comprenant un filtre (100), une vanne d'eau (200) et une bouteille d'eau (300) communiqués en séquence,
dans lequel la vanne d'eau (200) est sélectivement communiquée avec la bouteille d'eau (300) via un ensemble d'entrée d'eau de bouteille d'eau (400) ; l'ensemble d'entrée d'eau de bouteille d'eau (400) comprend un manchon d'entrée d'eau (410) et une pièce d'insertion d'entrée d'eau (420) insérée de manière rotative dans le manchon d'entrée d'eau (410), et des canaux de flux d'entrée d'eau, qui sont configurés pour être mutuellement communiqués, sont disposés dans la pièce d'insertion d'entrée d'eau (420) et le manchon d'entrée d'eau (410) ; le manchon d'entrée d'eau (410) est prévu sur l'une de la bouteille d'eau (300) et de la vanne d'eau (200), et la pièce d'insertion d'entrée d'eau (420) est prévue sur l'autre de la bouteille d'eau (300) et de la vanne d'eau (200) ; la pièce d'insertion d'entrée d'eau (420) est pourvue d'une protubérance limitante d'entrée d'eau (421), et le manchon d'entrée d'eau (410) comprend un cylindre d'entrée d'eau (411), un port d'insertion d'entrée d'eau (412) formé sur le cylindre d'entrée d'eau (411) et un trou limitant d'entrée d'eau (413) prévu dans une direction circonférentielle du cylindre d'entrée d'eau (411) ; le manchon d'entrée d'eau (410) est en outre pourvu d'une rainure de guidage d'entrée d'eau (414) correspondant à la protubérance limitante d'entrée d'eau (421), et la rainure de guidage d'entrée d'eau (414) s'étend depuis le port d'insertion d'entrée d'eau (412) le long d'une direction axiale du manchon d'entrée d'eau (410) et est communiquée avec une partie d'extrémité du trou limitant d'entrée d'eau (413) ; et dans la direction circonférentielle du cylindre d'entrée d'eau (411), une dimension du trou limitant d'entrée d'eau (413) est supérieure à une dimension de la rainure de guidage d'entrée d'eau (414), de sorte que, lorsque la pièce d'insertion d'entrée d'eau (420) est insérée dans le manchon d'entrée d'eau (410), la protubérance limitante d'entrée d'eau (421) sur la pièce d'insertion d'entrée d'eau (420) est configurée pour entrer dans la rainure de guidage d'entrée d'eau (414) depuis le port d'insertion d'entrée d'eau (412) sur le manchon d'entrée d'eau (410), et lorsque la bouteille d'eau (300) est tournée le long de l'axe de rotation dans une première direction,
la protubérance limitante d'entrée d'eau (421) est configurée pour entrer dans le trou limitant d'entrée d'eau (413) ; puisque la dimension du trou limitant d'entrée d'eau (413) est supérieure et que le trou limitant d'entrée d'eau (413) n'est pas communiqué avec le port d'insertion d'entrée d'eau (412), à cet état, la protubérance d'entrée d'eau (421) et le trou limitant d'entrée d'eau (413) sont configurés pour être en ajustement d'encliquetage;
dans lequel une extrémité de la bouteille d'eau (300) est reliée de manière détachable à la vanne d'eau (200) par l'ensemble d'entrée d'eau de bouteille d'eau (400), l'ensemble d'entrée d'eau de bouteille d'eau (400) sert non seulement à relier la bouteille d'eau (300) et la vanne d'eau (200), mais sert aussi à laisser passer de l'eau à travers celles-ci, aucun tuyau d'eau n'est prévu entre la bouteille d'eau (300) et la vanne d'eau (200), et la bouteille d'eau (300) et la vanne d'eau (200) sont directement reliées via l'ensemble d'entrée d'eau de bouteille d'eau (400).

2. Le dispositif intégré à circuit d'eau selon la revendication 1, dans lequel le manchon d'entrée d'eau (410) s'étend vers l'extérieur depuis une entrée d'eau de la bouteille d'eau (300), et le manchon d'entrée d'eau (410) ainsi que la bouteille d'eau (300) sont formés intégralement; la pièce d'insertion d'entrée d'eau (420) s'étend vers l'extérieur depuis une sortie d'eau de la vanne d'eau (200), et la pièce d'insertion d'entrée d'eau (420) ainsi que la vanne d'eau (200) sont formées intégralement.

3. Le dispositif intégré à circuit d'eau selon la revendication 1, dans lequel le filtre est sélectivement communiqué avec la vanne d'eau (200) via un ensemble de sortie d'eau de filtre (700) ; l'ensemble de sortie d'eau de filtre (700) comprend un manchon de sortie d'eau et une pièce d'insertion de sortie d'eau insérée de manière rotative dans le manchon de sortie d'eau, et des canaux de flux de sortie d'eau, qui peuvent être communiqués mutuellement, sont disposés dans la pièce d'insertion de sortie d'eau et dans le manchon de sortie d'eau ; le manchon de sortie d'eau est prévu sur l'une de la bouteille d'eau (300) et de la vanne d'eau (300), et la pièce d'insertion de sortie d'eau est prévue sur l'autre de la bouteille d'eau (300) et de la vanne d'eau (300) ; la pièce d'insertion de sortie d'eau est pourvue d'une protubérance limitante de sortie d'eau, et le manchon de sortie d'eau comprend un cylindre de sortie d'eau, un port d'insertion de sortie d'eau formé sur le cylindre de sortie d'eau et un trou limitant de sortie d'eau prévu dans une direction circonférentielle du cylindre de sortie d'eau ; le manchon de sortie d'eau est en outre pourvu d'une rainure de guidage de sortie d'eau correspondant à la protubérance limitante de sortie d'eau, et la rainure de guidage de sortie d'eau s'étend depuis le port d'insertion de sortie d'eau le long d'une direction axiale du manchon de sortie d'eau et est communiquée avec une partie d'extrémité du trou limitant de sortie d'eau ; dans la direction circonférentielle du cylindre de sortie d'eau, une dimension du trou limitant de sortie d'eau est supérieure à une dimension de la rainure de guidage de sortie d'eau.

4. Le dispositif intégré à circuit d'eau selon la revendication 3, dans lequel deux quelconques du filtre (100), de la vanne d'eau (200) et de la bouteille d'eau (300) sont disposés mutuellement adjacents, et l'ensemble d'entrée d'eau de bouteille d'eau (400) est perpendiculaire à l'ensemble de sortie d'eau de filtre (700).

5. Le dispositif intégré à circuit d'eau selon la revendication 1, dans lequel la pièce d'insertion d'entrée d'eau (420) comprend une première partie d'insertion (422) et une deuxième partie d'insertion (423) prévue à une extrémité avant de la première partie d'insertion (422), et un diamètre extérieur de la deuxième partie d'insertion (423) est inférieur à un diamètre extérieur de la première partie d'insertion (422).

6. Le dispositif intégré à circuit d'eau selon la revendication 5, dans lequel la deuxième partie d'insertion (423) est manchonnée d'une pièce d'étanchéité (4231).

7. Le dispositif intégré à circuit d'eau selon la revendication 5, dans lequel la pièce d'insertion d'entrée d'eau (420) comprend en outre un arrêt (424) relié à la première partie d'insertion (421), et une surface d'extrémité de l'arrêt (424) joute contre une surface d'extrémité du manchon d'entrée d'eau (410).

8. Le dispositif intégré à circuit d'eau selon la revendication 1, dans lequel la pièce d'insertion d'entrée d'eau (420) est pourvue de deux protubérances limitantes d'entrée d'eau (421), les deux protubérances limitantes d'entrée d'eau (421) sont disposées symétriquement par rapport à un axe de la pièce d'insertion d'entrée d'eau (420), et deux rainures de guidage d'entrée d'eau (413) sont disposées à des positions sur le manchon d'entrée d'eau (420) correspondant aux deux protubérances limitantes d'entrée d'eau (421).

9. Le dispositif intégré à circuit d'eau selon la revendication 1, dans lequel le dispositif intégré à circuit d'eau comprend en outre un boîtier (800), et le boîtier (800) enferme le filtre (100) et la vanne d'eau (200).

10. Un réfrigérateur comprenant une chambre réfrigérante, dans lequel la chambre réfrigérante est pourvue là-dedans du dispositif intégré à circuit d'eau selon l'une quelconque des revendications 1 à 9.
